# EUROPÄISCHE PATENTSCHRIFT

(11) **EP 0 466 065 B1**
(45) Veröffentlichungstag und Bekanntmachung des Hinweises auf die Patenterteilung: **24.05.1995**
(21) Anmeldenummer: 91111314.0
(22) Anmeldetag: 08.07.1991
(51) Int. Cl.: B62D 51/02, B66F 9/075

(54) **Lastförderfahrzeug**
Load handling vehicle
Véhicule de transport de charges

(30) Priorität: 11.07.1990 DE 4021986
(43) Veröffentlichungstag der Anmeldung: 15.01.1992
(73) Patentinhaber: STEINBOCK BOSS GmbH, D-85368 Moosburg (DE)
(72) Erfinder: Mittermeier, Albert, W-8301 Bruckberg (DE)
(74) Vertreter: Weickmann, Heinrich, Dipl.-Ing.

(56) Entgegenhaltungen:
- US-A- 2 691 430
- US-A- 4 211 297

## Beschreibung

Die Erfindung betrifft ein Lastförderfahrzeug zum Befahren einer Fahrfläche, umfassend einen Grundrahmen, eine Lastaufnahmeeinrichtung, einen Fahrantrieb, eine zwischen einer Außerbetriebsstellung und einer im wesentlichen horizontalen Mitfahrstellung um eine horizontale Schwenkachse schwenkbar an dem Grundrahmen angebrachte Mitfahrplattform und ein an dem Grundrahmen angebrachtes Lenkorgan zur Beeinflussung der Fahrtrichtung durch eine das Lastförderfahrzeug wahlweise gehend oder auf der Mitfahrplattform in deren Mitfahrstellung stehend mitfahrend begleitende Bedienungsperson.

Bei Lastförderfahrzeugen dieser Art ist das Lenkorgan derart an dem Grundrahmen angebracht, daß es von einer auf der Fahrfläche gehenden, das Lastförderfahrzeug auf seinem Fahrweg begleitenden Bedienungsperson betätigbar ist. Die Mitfahrplattform nimmt in ihrer Mitfahrstellung eine solche Lage gegenüber dem Grundrahmen ein, daß die auf der Mitfahrplattform stehende Bedienungsperson Zugriff zu dem Lenkorgan hat.

In der US-A-26 91 430 ist ein solches Lastförderfahrzeug nach dem Oberbegriff des Anspruchs 1 in Form eines Gabelhubwagens beschrieben.

Bei derartigen aus der Praxis bekannten Lastförderfahrzeugen wird die Mitfahrplattform von der Außerbetriebsstellung in die Mitfahrstellung von Hand verschwenkt. Um die Mitfahrplattform ergreifen und verschwenken zu können, muß sich hierzu die Bedienungsperson bücken und muß anschließend, je nach ihrem Körperbau, beim Ausschwenken der Mitfahrplattform zurücktreten, um der Mitfahrplattform Platz zu schaffen. Dabei muß die Bedienungsperson das Gewicht der Mitfahrplattform beim Verschwenken halten. Da die Mitfahrplattform schwer ausgeführt sein kann, stellt also das Ausschwenken der Mitfahrplattform von Hand eine erhebliche Belastung für die Bedienungsperson dar. Muß die Mitfahrplattform mehrmals unmittelbar aufeinanderfolgend aus der Außerbetriebsstellung in die Mitfahrstellung verschwenkt werden, ermüdet hierdurch die Bedienungsperson frühzeitig.

Es ist Aufgabe der vorliegenden Erfindung, ein Lastförderfahrzeug der eingangs genannten Art zu schaffen, bei dem das Verschwenken der Mitfahrplattform aus der Außerbetriebsstellung in die Mitfahrstellung auf einfache, die Bedienungsperson entlastende Weise geschieht.

Diese Aufgabe wird erfindungsgemäß dadurch gelöst, daß an einer Stelle des Lastförderfahrzeugs oberhalb der Mitfahrplattform ein von der Bedienungsperson zu bedienendes Fernbetätigungsorgan vorgesehen ist, durch dessen Bedienung die Mitfahrplattform, ausgehend von ihrer Außerbetriebsstellung, an die Mitfahrstellung angenähert wird.

Durch die vorgeschlagene Lösung wird erreicht, daß das Verschwenken der Mitfahrplattform aus der Außerbetriebsstellung in eine der Mitfahrstellung angenäherte Stellung von Hand entfallen kann. Somit muß sich die Bedienungsperson nicht mehr bücken und insbesondere beim Verschwenken auch nicht mehr das Gewicht der Mitfahrplattform halten. Hierbei spielt die Häufigkeit des Verschwenkens keine Rolle mehr. Die Bedienungsperson wird also durch die vorgeschlagene Lösung deutlich entlastet.

Um zu verhindern, daß die Bedienungsperson von der Mitfahrplattform beim Verschwenken aus der Außerbetriebsstellung in eine der Mitfahrstellung angenäherte Stellung verletzt wird, kann vorgesehen werden, daß die Mitfahrplattform durch Einwirkung auf das Fernbetätigungsorgan von der kußerbetriebsstellung in eine zwischen der Außerbetriebsstellung und der Mitfahrstellung gelegene Bereitschaftstellung überführbar ist. Dabei kann die Bereitschaftsstellung so gewählt werden, daß die in Bereitschaftsstellung befindliche Mitfahrplattform unter einem Neigungswinkel relativ zur Mitfahrstellung positioniert ist und zumindest mit ihrem der Schwenkachse entfernten Bereich über den Grundrahmen hinaus nach außen absteht, um von der Bedienungsperson in die Mitfahrstellung getreten zu werden. Die in Bereitschaftsstellung befindliche Mitfahrplattform ist dabei in einem von der Schwenkachse ferngelegenen Bereich von dem einen Fuß der Bedienungsperson erreichbar, während diese Bedienungsperson mit dem anderen Fuß auf der Fahrfläche steht. Die Bedienungsperson kann also die Mitfahrplattform, nachdem diese die Bereitschaftsstellung erreicht hat, auf eine einfache und sie wenig belastende Weise in die Mitfahrstellung weiter verschwenken. Dies wird noch dadurch unterstützt, daß der Angriffspunkt für den Fuß in einem zu der Schwenkachse fern gelegenen Bereich liegt, wodurch aufgrund des Hebelarms die Bedienungsperson mit einer verhältnismäßig geringen Kraft die Mitfahrplattform verschwenken kann.

Zum anderen kann die Bereitsschaftstellung alternativ oder hierzu ergänzend so gewählt werden, daß die Mitfahrplattform bei ihrem Übergang von der Außerbetriebsstellung in die Bereitschaftsstellung die auf der Fahrfläche in Bedienungsstellung zu dem Lenkorgan stehende Bedienungsperson nicht oder nur unwesentlich berührt. Hierdurch wird verhindert, daß die Bedienungsperson beim Verschwenken der Mitfahrplattform von der Außerbetriebsstellung in die Bereitschaftsstellung von der Mitfahrplattform verletzt wird.

Damit zum einen die Mitfahrplattform in der Bereitschaftsstellung sicher gehalten ist und zum anderen die Mitfahrplattform aus der Mitfahrstellung nach Heruntertreten der Bedienungsperson von dieser wieder automatisch in die Bereitschaftsstellung zurückschwenkt, wird weiterhin vorgeschlagen, daß die Mitfahrplattform in ihrer Bereitschaftsstellung durch eine Plattformfederung abgestützt und durch die in der Bereitschaftsstellung auf die Mitfahrplattform tretende Bedienungsperson entgegen der Wirkung der Plattformfederung in die Mitfahrstellung verschwenkbar ist.

Das Zurückführen der Mitfahrplattform aus der Bereitschaftsstellung in die Außerbetriebsstellung kann dann von Hand erfolgen. Damit die Bedienungsperson auch hierbei entlastet wird, kann vorgesehen werden, daß die Mitfahrplattform durch die Plattformfederung von der Bereitschaftsstellung in die Außerbetriebsstellung zurückstellbar ist und daß die Mitfahrplattform durch eine mittels des Fernbetätigungsorgans auslösbare Betätigungskraft von der Außerbetriebsstellung entgegen der Wirkung der Plattformfederung in die Bereitschaftsstellung überführbar ist. Die Bedienungsperson muß dann nur noch mit dem Fuß auf die in der Bereitschaftsstellung leicht erreichbare Mitfahrplattform treten, um diese gegen die Wirkung der Plattformfederung in die Mitfahrstellung zu bringen.

Um der Bedienungsperson während des Mitfahrens zu ermöglichen, sich an dem Lastförderfahrzeug abstützen zu können, kann vorgesehen werden, daß an dem Grundrahmen mindestens eine Stützwange in solcher Lage zu der in Mitfahrstellung befindlichen Mitfahrplattform angebracht wird, daß sich die auf der Mitfahrplattform stehende Bedienungsperson an dieser Stützwange abstützen kann. Diese Stützwange, die jede beliebeige Form aufweisen kann, hat dabei gleichzeitig eine Sicherungsfunktion, um zu verhindern, daß die Bedienungsperson während des Mitfahrens von der Mitfahrplattform herabstürzt.

Damit die Stützwange nach dem Mitfahren der Bedienungsperson bzw. bei einem Gehbetrieb die Bedienungsperson bei der Bedienung des Lastförderfahrzeuges nicht behindert und damit eine mögliche Unfallgefahr aufgrund einer über den Grundrahmen hervorstehenden Stützwange beseitigt wird, kann vorgesehen werden, daß die mindestens eine Stützwange zwischen einer Mitfahrstellung und einer Außerbetriebsstellung verstellbar ist. Dies kann beispielsweise dadurch erreicht werden, daß die Stützwange von dem Mitfahrstellung ausgehend in eine entsprechende Aufnahme im Grundrahmen eingeschoben werden kann. Es besteht aber auch die Möglichkeit, daß die Stützwange von der Mitfahrstellung in die Außerbetriebsstellung um eine zu der Schwenkachse der Mitfahrplattform im wesentlichen parallele Schwenkachse zwischen der Mitfahrstellung und der Außerbetriebsstellung verschwenkbar ist. Diese Alternative läßt sich auf verhältnismäßig einfache Weise realisieren, da an dem Grundrahmen lediglich eine Lagerung für die Schwenkachse angebracht werden muß. Besonders vorteilhaft ist es dabei, daß die Stützwange in der Mitfahrstellung im wesentlichen horizontal und annähernd parallel zu der Ausladerichtung der Mitfahrplattform gegenüber dem Grundrahmen auslädt und in der Außerbetriebsstellung um annähernd 180° gegenüber der Mitfahrstellung verschwenkt ist sowie über einem Teil des Grundrahmens liegt. Hierdurch wird erreicht, daß die Stützwange für die Bedienungsperson einerseits leicht zugänglich ist und andererseits in ihrer Außerfunktionsstellung die Bedienungsperson nicht behindert.

Um die Gefahr eines Herunterfallens der Bedienungsperson während des Mitfahrens weiter zu verringern, wird weiterhin vorgeschlagen, daß zwei Stützwangen vorgesehen sind, welche die auf der Mitfahrplattform stehende Bedienungsperson annähernd in deren Hüfthöhe zwischen sich aufnehmen. Die Anordnung der Stützwangen in Hüfthöhe hat dabei den Vorteil, daß die Bedienungsperson durch die Stützwangen nicht behindert wird, wenn sie auf der Mitfahrplattform steht.

Das Fernbetätigungsorgan zum Verschwenken der Mitfahrplattform von einer Außerbetriebsstellung in eine der Mitfahrstellung angenäherte Stellung kann durch die unterschiedlichsten Elemente gebildet sein. So besteht beispielsweise die Möglichkeit, daß ein Schalter vorgesehen wird, bei dessen Betätigung von Hand die Mitfahrplattform zB. durch einen Antriebsmotor verschwenkt wird. Vorzugsweise kann das Fernbetätigungsorgan von der mindestens einen Stützwange gebildet sein derart, daß bei Annäherung der Stützwange an ihre Mitfahrstellung eine Bewegung der Mitfahrplattform von ihrer Außerbetriebsstellung in Richtung auf ihre Mitfahrstellung ausgelöst wird. Da bei vorhandenen Stützwangen diese beim Mitfahren aus der Außerbetriebsstellung in die Mitfahrstellung verschwenkt werden, wird hierdurch erreicht, daß die Bedienungsperson kein weiteres Betätigungsorgan bedienen muß, um ein Ausschwenken der Mitfahrplattform zu erreichen.

Das Auslösen der Schwenkbewegung der Mitfahrplattform kann wiederum auf verschiedenen Wegen erfolgen. So besteht die Möglichkeit, daß das Fernbetätigungsorgan mit der Mitfahrplattform durch ein mechanisches Kraftübertragungsgestänge verbunden ist. Beim Verschwenken der Stützwange von der Außerbetriebsstellung in die Mitfahrstellung wird die Schwenkbewegung der Stützwange somit dazu verwendet, die Mitfahrplattform von der Außerbetriebsstellung in eine der Mitfahrstellung angenäherte Stellung zu verschwenken. Das mechanische Kraftübertragungsgestänge kann hierbei mit der Mitfahrplattform lose gekoppelt sein, wobei bei Betätigung des Fernbetätigungsorgans im Sinne der Auslösung einer Annäherung der Mitfahrplattform in Richtung auf ihre Mitfahrstellung das Übertragungsgestänge eine stellkraft auf die Mitfahrplattform überträgt, bis die Mitfahrplattform eine Bereitschaftsstellung erreicht hat, und wobei die Mitfahrplattform von dieser Bereitschaftsstellung aus unter Entkoppelung von dem Übertragungsgestänge in die Mitfahrstellung weiter verschwenkbar ist.

Um das Zurückführen der Mitfahrplattform von der Mitfahrstellung in die Außerbetriebsstellung auf einfache Weise zu ermöglichen, kann hierbei weiter vorgesehen werden, daß die Mitfahrplattform durch eine im gesamten Schwenkbereich der Mitfahrplattform zwischen ihrer Mitfahrstellung und ihrer Außerbetriebsstellung wirksame, die Mitfahrplattform in Richtung auf die Außerbetriebsstellung vorspannende Plattformfederung vorgespannt ist und daß das Übertragungsgestänge eine an dem Grundrahmen im wesentlichen vertikal geführte Übertragungsstange aufweist, welche an ihrem oberen Ende mit dem Fernbetätigungsorgan verbunden ist und an ihrem unteren Ende mit dem einen Hebelarm eines Winkelhebels gekoppelt ist, dessen anderer Hebelarm auf die Mitfahrplattform einwirkt. Die Übertragungsstange kann dabei an ihrem oberen Ende ein Angriffsorgan tragen, welches von dem Fernbetätigungsorgan beaufschlagbar ist und welches - als Rolle ausgebildet - die Reibung zwischen der Übertragungsstange und dem Fernbetätigungsorgan verringert.

Um Fertigungstoleranzen in dem Übertragungsgestänge ausgleichen zu können, kann weiterhin vorgesehen werden, daß die Übertragungsstange längeneinstellbar ist.

Damit beim Gehbetrieb möglicherweise auftretende Klappergeräusche vermieden werden, kann weiterhin vorgesehen werden, daß die Übertragungsstange in Richtung auf das Fernbetätigungsorgan vorgespannt ist. Die Vorspannung kann dabei durch eine Feder, insbesondere durch eine Schraubenfeder erfolgen, deren Federkraft derart gewählt ist, daß das Fernbetätigungsorgan durch diese Feder nicht beeinflußt wird, wenn es sich in der Mitfahrstellung befindet.

Als Alternative für das Auslösen der Schwenkbewegung der Mitfahrplattform kann weiter vorgesehen werden, daß das Fernbetätigungsorgan auf ein Steuerorgan eines elektrischen oder pneumatischen oder hydraulischen Kraftgeräts einwirkt, welches seinerseits auf die Mitfahrplattform einwirkt. Hierdurch muß die Bedienungsperson lediglich das Steuerorgan mittels des Fernbetätigungsorgans schalten, um ein Verschwenken der Mitfahrplattform zu erreichen. Gegenüber der Ausführungsform mit dem mechanischen Gestänge wird hierdurch die Bedienungsperson entlastet.

Damit die Mitfahrplattform aus ihrer Mitfahrstellung von selbst in die Außerbetriebsstellung nach Heruntertreten der Bedienungsperson von der Mitfahrplattform zurückschwenkt, kann hierbei ebenfalls vorgesehen werden, daß die Mitfahrplattform auf ihrem gesamten Schwenkweg zwischen der Mitfahrstellung und der Außerbetriebsstellung durch eine Plattformfederung beaufschlagt ist, welche die Mitfahrplattform in die Außerbetriebsstellung zu schwenken sucht, und daß das Kraftgerät zur Verstellung der Mitfahrplattform von der Außerbetriebsstellung bis in eine Bereitschaftsstellung ausgebildet ist.

Um sicherzustellen, daß ein Mitfahren der Bedienungsperson nur dann möglich ist, wenn die Mitfahrplattform und eine ggf. vorhandene Stützwange vollständig in ihre Mitfahrstellung verschwenkt worden sind, können Überwachungsmittel vorgesehen werden, welche den Betrieb des Lastförderfahrzeugs nur dann ermöglichen, wenn bei in Mitfahrstellung befindlicher Mitfahrplattform gleichzeitig auch mindestens eine Stützwange für die Bedienungsperson in einer Mitfahrstellung sich befindet. Selbstverständlich können derartige Überwachungsmittel auch dann vorgesehen werden, wenn das Lastförderfahrzeug nur eine Mitfahrplattform, aber keine Stützwangen aufweist.

Ebenso kann es notwendig sein, ein Fahren des Lastförderfahrzeuges zu verhindern, solange die Mitfahrplattform und eine ggf. vorhandene Stützwange sich nicht in ihrer Außerbetriebsstellung befinden. Hierzu können Überwachungsmittel vorgesehen werden, welche einen Betrieb des Lastförderfahrzeugs nur dann ermöglichen, wenn die Mitfahrplattform und ggf. eine Stützwange sich in einer für den Gehbetrieb bestimmten Außerbetriebsstellung befinden.

Ein besonderer Vorteil der Überwachungsmittel ergibt sich im Zusammenhang mit der Bereitschaftsstellung der Mitfahrplattform. Sobald die Bedienungsperson von der Mitfahrplattform heruntersteigt, schwenkt diese von ihrer Mitfahrstellung in die Bereitschaftsstellung. Die Überwachungsmittel unterbinden dann, wie oben geschildert, den Betrieb des Lastförderfahrzeuges. Nach erneutem Aufsteigen der Bedienungsperson wird die Unterbrechung der Überwachungsmittel aufgehoben. Somit kann während des Mitfahrbetriebes die Bedienungsperson das Lastförderfahrzeug kurzzeitig verlassen, ohne daß besondere Maßnahmen zu dessen Sicherung ergriffen werden müssen. Die Überwachungsmittel können dabei beispielsweise Endschalter sein.

Da bei einem Mitfahrbetrieb höhere Geschwindigkeiten des Lastförderfahrzeugs als bei einem Gehbetrieb möglich sind, bei dem sich die Geschwindigkeit nach der das Lastförderfahrzeug begleitenden Person richtet, können Steuermittel für den Fahrbetrieb vorgesehen werden, welche unterschiedliche Fahrgeschwindigkeiten des Lastförderfahrzeugs in Abhängigkeit von der Stellung der Mitfahrplattform und/oder einer Stützwange zulassen.

Weitere vorteilhafte Ausgestaltungen sowie Ausführungsbeispiele werden nachstehend an Hand der Zeichnung erläutert. Es zeigt:
- Fig. 1: eine allgemeine Seitenansicht eines erfindungsgemäßen Lastförderfahrzeugs;
- Fig. 2: einen vergrößerten Teilschnitt durch ein erstes Ausführungsbeispiel des Lastförderfahrzeuges gemäß Fig. 1;
- Fig. 3: einen vergrößerten Teilquerschnitt durch ein zweites Ausführungsbeispiel des Lastförderfahrzeugs gemäß Fig. 1; und
- Fig. 4: ein Hydraulikschema zu dem Ausführungsbeispiel gemäß Fig. 3.

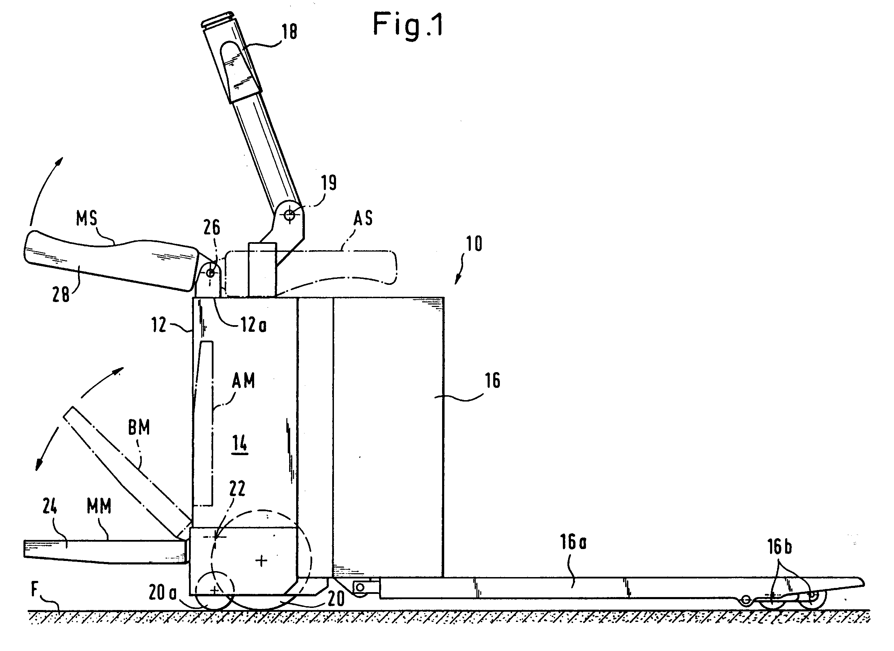

In Fig. 1 ist als ein erfindungsgemäßes Lastförderfahrzeug ein Gabelhubwagen 10 gezeigt. Der Gabelhubwagen 10 umfaßt ein einen Grundrahmen 12 aufweisenden Antriebsteil 14 und ein an dem Antriebsteil 14 mittels eines nicht weiter gezeigten Kraftgerätes, insbesondere eines Hydraulikkraftgerätes, höheneinstellbares, eine Lastaufnahmeeinrichtung bildendes Lasttragteil 16. An dem Grundrahmen 12 des Antriebsteils 14 ist eine ein Lenkorgan 18 bildende, um eine Horizontalachse 19 schwenkbare Lenkdeichsel angeordnet, die zur Beeinflussung der Fahrtrichtung auf ein ebenfalls an dem Grundrahmen 12 gelagertes, auf einem Fahrboden F aufstehendes Lenkrad 20 einwirkt, welches gleichzeitig auch das Antriebsrad des Gabelhubwagens 10 ist. Die Lenkdeichsel 18 ist dabei so an dem Grundrahmen 12 angeordnet, daß sie von einer auf der Fahrfläche F gehenden, den Gabelhubwagen 10 begleitenden Bedienungsperson betätigbar ist.

An dem Grundrahmen 12 ist um eine horizontale Achse 22, die in Fig. 1 nur schematisch dargestellt ist, gegenüber dem Lasttragteil 16 eine Mitfahrplattform 24 schwenkbar gelagert. Die Mitfahrplattform 24 kann von einer Außerbetriebsstellung AM über eine Bereitschaftsstellung BM in eine Mitfahrstellung MM verschwenkt werden. Die Außerbetriebsstellung AM sowie die Bereitschaftsstellung BM sind in Fig. 1 strichpunktiert und die Mitfahrstellung MM mit ausgezogenen Linien dargestellt. In der Mitfahrstellung MM nimmt die Mitfahrplattform 24 eine im wesentlichen horizontale Lage ein, wobei die auf der Mitfahrplattform 24 stehende Bedienungsperson die Lenkdeichsel 18 erreichen kann. In der Außerbetriebsstellung AM befindet sich die Mitfahrplattform 24 dagegen in einer im wesentlichen vertikalen Lage.

An dem oberen, horizontal verlaufenden Rahmenabschnitt 12a des Grundrahmens 12 sind darüber hinaus zwei über eine gemeinsame Horizontalachse 26 verschwenkbare Stützwangen 28 vorgesehen. In Fig. 1 ist nur eine der beiden Stützwangen 28 sichtbar, da sich die andere Stützwange senkrecht zu der Zeichenebene in Fig. 1 hinter der dargestellten Stutzwange 28 befindet. Die Stützwangen 28 sind aus einer Außerbetriebsstellung AS, wo sie auf dem oberen, horizontalen Rahmenabschnitt 12a aufliegen, um annäherend 180° in eine Mitfahrstellung MS verschwenkbar, wo sie eine Lage annäherend parallel zu der Mitfahrplattform 24 einnehmen und über den Grundrahmen 12 in Richtung der ausgeschwenkten Mitfahrplattform 24 hinausragen. In Fig. 1 ist die Außerbetriebsstellung AS der Stützwange 28 strichpunktiert und die Mitfahrstellung MS mit ausgezogenen Linien dargestellt.

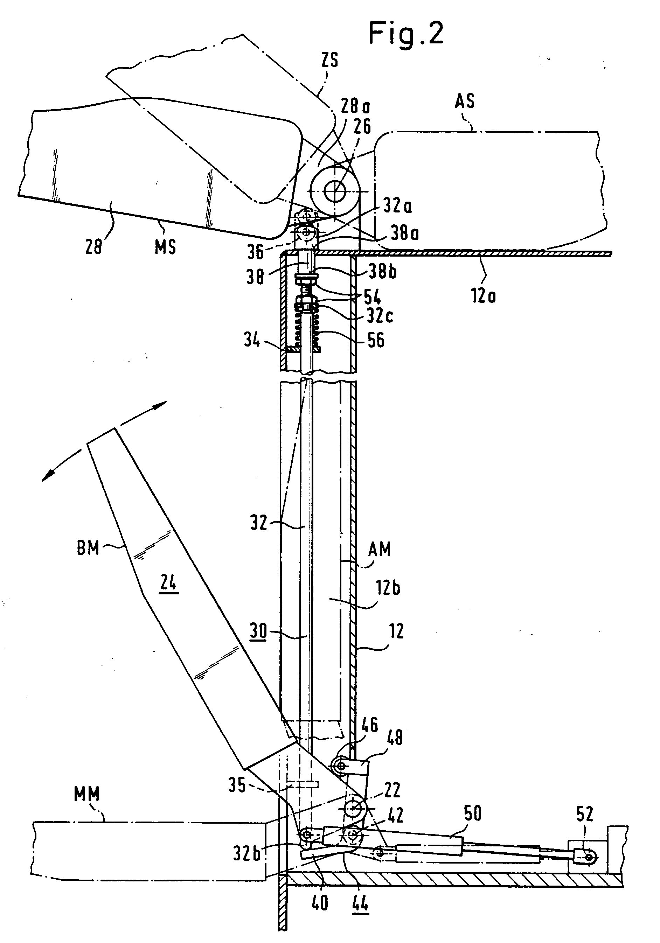

In Fig. 2 ist ein erstes Ausführungsbeispiel für eine durch ein Fernbetätigungsorgan betätigbare Einrichtung zum Verschwenken der Mitfahrplattform 24 aus der Außerbetriebsstellung AM in eine einer Mitfahrstellung MM angenäherte Stellung gezeigt. Hierbei wird das Fernbetätigungsorgan durch die Stützwangen 28 gebildet. Die Stützwangen 28 sind über ein Kraftübertragungsgestänge 30 mit der Mitfahrplattform 24 verbunden. Das Kraftübertragungsgestänge 30 umfaßt eine vertikal in dem Grundrahmen 12 angeordnete Übertragungsstange 32, die bei 34 und 35 an dem Grundrahmen 12 geführt ist. Das obere Ende 32a der Übertragungsstange 32 ragt aus dem Grundrahmen 12 hervor und weist eine mit ihr fest verbundene und mit einer ein Angriffsorgan bildende Rolle 36 versehene Hülse 38 auf. Die Rolle 36 soll dabei die Reibung zwischen den Stützwangen 28 und der Übertragungsstange 32 verringern, sobald diese in Kontakt miteinanderkommen. Das andere Ende 32b der Übertragungsstange 32 liegt an einem Hebelarm 40 eines um eine horizontale Schwenkachse 42 schwenkbaren Winkelhebels 44 an. Der andere mit einer Rolle 46 versehene Hebelarm 48 des Winkelhebels 44 liegt demgegenüber mit einem Abstand zu der Schwenkachse 22 der Mitfahrplattform 24 an dieser an, wobei die Rolle 46 die Reibung zwischen dem Winkelhebel 44 und der Mitfahrplattform 24 verringern soll. An der Mitfahrplattform 24 greift darüber hinaus ebenfalls mit einem Abstand zu deren Schwenkachse 22 ein eine Plattformfederung bildendes Federelement 50 an. Das Federelement 50 ist schwenkbar bei 52 an dem Grundrahmen 12 gelagert und kann beispielsweise durch eine Schraubenfeder oder durch eine Fluidfeder, insbesondere Gasfeder, gebildet sein. Das Federelement 50 spannt die Mitfahrplattform 24 in Richtung auf deren Außerbetriebsstellung AM vor.

Die Funktionsweise dieser Einrichtung wird nachstehend beschrieben: In ihrer Außerfunktionsstellung AS liegen die Stützwangen 28 auf dem oberen Rahmenabschnitt 12a des Grundrahmens 12 auf. Die Mitfahrplattform 24 befindet sich in einer Vertiefung 12b des Grundrahmens 12, die so ausgestaltet ist, daß die Mitfahrplattform 24 in ihrer Außerfunktionsstellung AM nicht nach außen hervorragt. Werden durch die Bedienungsperson die Stützwangen 28 aus ihrer Außerbetriebsstellung AS in ihre Mitfahrstellung MS verschwenkt, so gelangen hierbei die Stützwangen 28 mit ihrer gemeinsamen Nabe 28a in Berührung mit der Rolle 36 der auf der Übertragungsstange 32 angeordneten Hülse 38, wie dies in Fig. 2 gezeigt ist. Bei Fortführung der Schwenkbewegung der Stützwangen 28 in Richtung auf deren Mitfahrstellung MS wird die Übertragungsstange 32 in Fig. 2 nach unten verschoben, wodurch der Hebel 44 um seine Schwenkachse 42 schwenkt und dabei die Mitfahrplattform 24 aus ihrer Außerbetriebsstellung AM in die Bereitschaftsstellung BM verschwenkt. Läßt die Bedienungsperson die Stützwangen 28 in diesem Augenblick los, schwenkt die Mitfahrplattform 24 infolge des Federelements 50 aus dieser Bereitschaftsstellung BM in die Außerfunktionsstellung AM zurück, wodurch gleichzeitig der Winkelhebel 44 und die Übertragungsstange 32 in ihre Ausgangsstellung zurückbewegt werden. Hält dagegen die Bedienungsperson die Stützwangen 28 fest, so ermöglicht ihr die Bereitschaftsstellung MB der Mitfahrplattform 24 diese aus dieser Stellung in die Mitfahrstellung MM zu verschwenken. Hierzu kann sie ihren Fuß auf den gegenüber der Schwenkachse 22 fernen Bereich der Mitfahrplattform 24 aufsetzen und die Mitfahrplattform 24 dann in die Mitfahrstellung MM verschwenken, wobei ihr anderer Fuß auf dem Fahrboden F aufsteht. Nachdem die Bedienungsperson auf die Mitfahrplattform 24 aufgestiegen ist, müssen die Stützwangen 28 nicht mehr festgehalten werden. Damit der Winkelhebel 44 nicht auf die Mitfahrplattform 24 fällt, wenn diese sich in ihrer Mitfahrstellung MM befindet, kann ein an dem Grundrahmen 12 angebrachter, nicht weiter gezeigter Anschlag vorgesehen werden, gegen den der Hebelarm 48 des Winkelhebels 44 in der in Fig. 2 gezeigten Stellung anliegt. Ebenso kann eine ebenfalls nicht gezeigte Drehfeder vorgesehen werden, die den Winkelhebel 44 entgegen der Ausschwenkbewegung der Mitfahrplattform 24 von ihrer Außerbetriebsstellung AM in ihre Bereitschaftsstellung BM vorspannt. Sobald die Bedienungsperson von der Mitfahrplattform 24 herabgestiegen ist und dabei die beiden Stützwangen 28 nicht weiter herunterdrückt, sorgt das Federelement 50 aufgrund seiner Vorspannung dafür, daß die Mitfahrplattform 24 von ihrer Mitfahrstellung MM über ihre Bereitschaftsstellung BM in ihre Außerbetriebsstellung AM zurückschwenkt. Hält dagegen die Bedienungsperson, nachdem sie abgestiegen ist, die Stützwangen 28 fest, so gelangt die Mitfahrplattform 24 aus ihrer Mitfahrstellung MM nur bis zu ihrer Bereitschaftsstellung BM, da das von den Stützwangen 28 noch herabgedrückte Übertragungsgestänge 30 und insbesondere der Winkelhebel 44, an dessen Rolle 46 die Mitfahrplattform 24 sich anlegt, ein Weiterverschwenken verhindern. Die Bedienungsperson kann dann die Mitfahrplattform sofort wieder in die Mitfahrstellung MM verschwenken. Ein Weiterverschwenken der Mitfahrplattform 24 von der Bereitschaftsstellung BM in die Außerbetriebsstellung AM ist erst dann möglich, wenn die Bedienungsperson beide Stützwangen 28 losläßt. Ist dies der Fall, so schwenkt die Mitfahrplattform 24 in ihre Außerbetriebsstellung AM und die Übertragungsstange 32 kehrt dabei infolge der Schwenkbewegung der Mitfahrplattform 24 in ihre Ausgangslage zurück. Hierbei werden durch die in Fig. 2 nach oben fahrende Übertragungsstange 32 die Stützwangen 28 angegehoben und gelangen in eine Zwischenstellung ZS, die in Fig. 2 strichpunktiert dargestellt ist, wovon sie leicht durch die Bedienungsperson wieder in ihre Außerbetriebsstellung AS verschwenkt werden können.

Um Fertigungstoleranzen ausgleichen zu können, weist die Übertragungsstange 32 eine Einstellrichtung 54 auf, mittels der die Länge der Übertragungsstange 32 eingestellt werden kann. Darüber hinaus ist zur Vermeidung eines im Gehbetrieb des Gabelhubwagens 10 möglicherweise auftretendes Klappern die Übertragungsstange 32 durch eine Druckfeder 56, die sich zum einen an der Führung 34 und zum anderen an einem Flansch 32c der Übertragungsstange 32 abstützt, in Richtung auf die Stützwangen 28 vorgespannt. Eine Maßnahme zur Vermeidung eines Klapperns in der nach unten verschobenen Stellung der Übertragungsstange 32 kann unterbleiben, da in diesem Fall die Übertragungsstange 32 durch die Stützwangen 28 in ihrer Position gehalten wird. Es sei noch darauf hingewiesen, daß die beiden Endstellungen der Übertragungsstange 32 durch zwei Anschläge 38a, 38b an der Hülse 38 festgelegt sind, um zu verhindern, daß die Übertragungsstange 32 zu weit aus dem Grundrahmen 12 hervortritt oder zu tief in ihn eintritt.

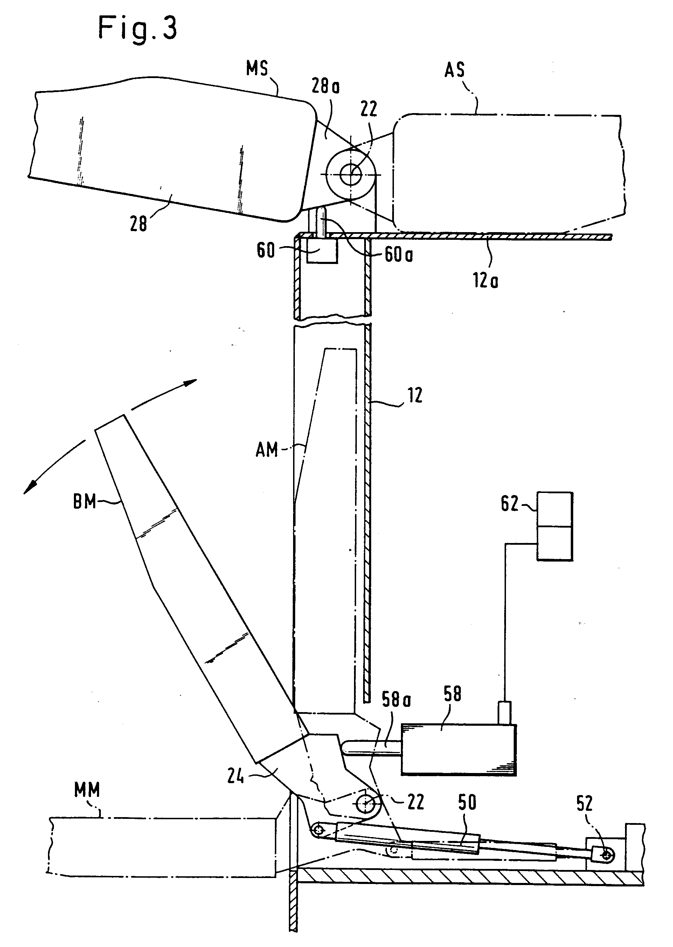

In Fig. 3 ist ein weiteres Ausführungsbeispiel gezeigt, das sich von dem in Fig. 2 gezeigten Ausführungsbeispiel dahingehend unterscheidet, daß zum Verschwenken der Mitfahrplattform 24 aus der Außerbetriebsstellung AM in eine der Mitfahrstellung MM angenäherte Stellung bzw. in die Bereitsschaftsstellung BM ein Kraftgerät 58 vorgesehen ist, welches bei diesem Ausführungsbeispiel als eine hydraulisch betätigbare Kolben-Zylindereinheit ausgeführt ist. Diese Kolben-Zylindereinheit 58 weist eine ein Betätigungsorgan bildende Kolbenstange 58a auf, welche bei Beaufschlagung der Kolben-Zylindereinheit 58 mit einem Druckfluid ausgefahren wird. Um die Kolben-Zylindereinheit 58 mit einem Druckfluid beaufschlagen zu können, ist in dem oberen Rahmenabschnitt 12a des Grundrahmens 12 ein Schalter 60 angeordnet, der durch die Stützwangen 28 betätigt wird. Der Schalter 60 steuert ein vorzugsweise Solenoid-Wegeventil 62, daß je nach seiner Schaltstellung einen Zufluß oder einen Abfluß von Druckfluid in bzw. aus der Kolben-Zylindereinheit 58 ermöglicht.

Die Funktionsweise dieses Ausführungsbeispiels wird nachstehend geschildert: Wenn die Stützwangen 28 aus ihrer Außerbetriebsstellung AS in ihre Mitfahrstellung MS verschwenkt werden, gelangt die Nabe 28a der Stützwangen 28 in Berührung mit einem vorzugsweise federbelasteten Kontaktstift 60a des Schalters 60, wie dies in Fig. 3 gezeigt ist. Wird die Schwenkbewegung weiter fortgeführt, so wird der Kontaktstift 60a vorzugsweise entgegen einer Federkraft niedergedrückt und veranlaßt dabei, daß das Wegeventil 62 so geschaltet wird, daß die Kolben-Zylindereinheit 58 mit Druckfluid von einer in Fig. 3 nicht gezeigten Druckfluidquelle beaufschlagt wird, so daß seine Kolbenstange 58a ausgefahren wird. Die Kolbenstange 58a liegt in der Außerbetriebsstellung AM der Mitfahrplattform 24 an dieser an, so daß ein Ausfahren der Kolbenstange 58a zur Folge hat, daß die Mitfahrplattform 24 von ihrer Außerbetriebsstellung AM in die Bereitschaftsstellung BM verschwenkt wird. Von dort aus kann die Mitfahrplattform 24, ebenso wie bei dem Ausführungsbeispiel gemäß der Fig. 2, mittels des Fußes der Bedienungsperson in die Mitfahrstellung MM verschwenkt werden. Tritt die Bedienungsperson von der Mitfahrplattform 24 herunter, so wird diese durch das Federungselement 50 von der Mitfahrstellung MM in die Bereitschaftsstellung BM verschwenkt. Ein Weiterverschwenken in die Außerbetriebsstellung AM ist hierbei noch nicht möglich, da die Bedienungsperson die Stützwangen 28 und somit den Schalter 60 weiterhin niederdrückt. Hierbei wird das Wegeventil 62 von dem Schalter 60 in der Weise gesteuert, daß ein Einfahren der Kolbenstange 58a aufgrund der Schaltstellung des Wegeventils 62 nicht erfolgen kann. Läßt nun die Bedienungsperson auch die Stützwangen 28 los, so geben diese den Schalter 60 frei, der wiederum das Wegeventil 62 in der Weise schaltet, daß das Druckfluid aus der Kolben-Zylindereinheit 58 abfließen kann. Die Federung 50 sorgt dann für ein weiteres Verschwenken der Mitfahrplattform 24 von der Bereitschaftsstellung BM in die Außerbetriebsstellung AM, wodurch gleichzeitig die Kolbenstange 58a der Kolben-Zylindereinheit 58 eingeschoben wird.

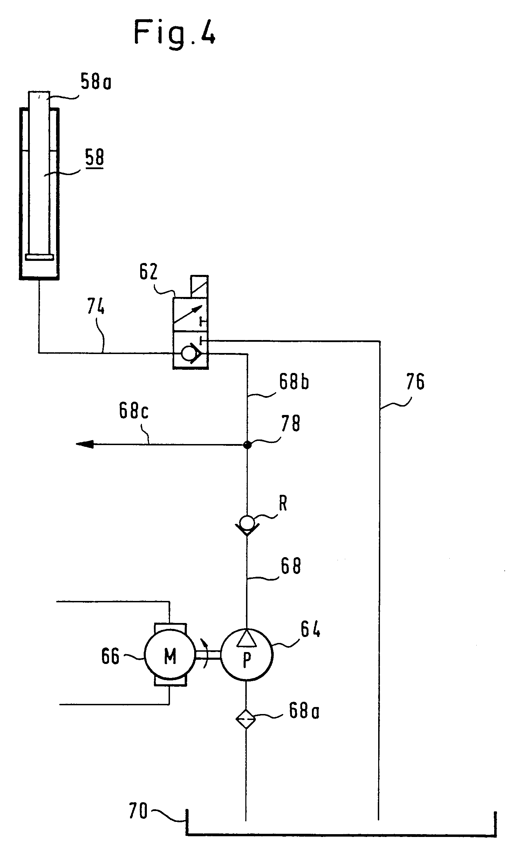

In Fig. 4 ist ein Hydraulikschema zu dem oben beschriebenen Ausführungsbeispiel gemäß Fig. 3 näher gezeigt. Als Antrieb für die Kolben-Zylindereinheit 58 dient eine Hydraulikpumpe 64, die von einem Motor 66, vorzugsweise einem Elektromotor, angetrieben wird. Über eine erste Leitung 68, in die in Strömungsrichtung vor der Pumpe 64 ein Filter 68a und in Strömungsrichtung nach der Pumpe 64 ein Rückschlagventil R angeordnet sind, wird Druckfluid von einem Tank 70 zu dem solenoid betätigbaren Wegeventil 62 geführt. Ist das Wegeventil 62 wie in Fig. 4 geschaltet, so kann das Druckfluid über eine weitere Leitung 74 zu der Kolben-Zylindereinheit 58 fließen, wodurch die Kolbenstange 58a der Kolben-Zylindereinheit 58 ausgefahren und die Mitfahrplattform 24 von ihrer Außerbetriebsstellung AM in ihre Bereitschaftsstellung BM verschwenkt wird. Soll die Mitfahrplattform 24 dagegen von der Bereitschaftsstellung BM in die Außerbetriebsstellung AM verschwenkt werden, so wird nach Freigeben der Stützwangen 28 durch den Schalter 60 das Wegeventil 62 in der Weise geschaltet, daß eine Leitungsverbindung zwischen der Leitung 74 und einer Rückflußleitung 76 hergestellt wird. Durch das Federelement 50 wird die Mitfahrplattform 24 von der Bereitschaftsstellung BM in die Außerbetriebsstellung AM verschwenkt, wodurch gleichzeitig die Kolbenstange 58a in die Kolben-Zylindereinheit 58 wieder eingeschoben wird und wodurch dann das Druckfluid über die Leitung 74 und die Leitung 76 in den Tank 70 zurückfließt. Es besteht die Möglichkeit, eine Federung für die Stützwangen in der Weise vorzusehen, daß beim Loslassen der Stützwangen 28 diese in eine den Schalter 60 freigebende Position schwenken. Ebenso kann hierfür eine Federung in dem Schalter 60 vorgesehen werden, die den Kontaktstift 60a in Richtung auf die Stützwangen 28 belastet und deren Federkraft ausreicht, nach Loslassen der Stützwangen 28 diese zusammen mit dem Kontaktstift 60a in ihre Ausgangsposition zu verschwenken bzw. zu verschieben.

Es ist noch zu bemerken, daß sich die erste Leitung 68 bei 78 in einen ersten Leitungszweig 68b, der zu dem Wegeventil 62 führt und in einen zweiten Leitungszweig 68c aufteilt, der zu dem Hydraulikkraftgerät für die Höhenverstellbarkeit des Lasttragteils 16 führt. Dieser Leitungszweig 68c ist durch ein weiteres, in Fig. 4 nicht gezeigtes Ventil gegenüber dem Leitungszweig 68b absperrbar, um zu verhindern, daß bei Zuführung von Druckfluid zu der Kolben-Zylindereinheit 58 nicht auch das Hydraulikkraftgerät für das Lasttragteil 16 beaufschlagt wird.

Es ist weiterhin zu bemerken, daß an dem erfindungsgemäßen Gabelhubwagen 10 noch in den Zeichnungsfiguren 1 - 4 nicht weiter gezeigte Überwachungsmittel angebracht werden können, um einen Betrieb des Gabelhubwagens 10 nur dann zu ermöglichen, wenn sich die Mitfahrplattform und die ggf. vorhandenen Stützwangen 28 in ihrer Mitfahrstellung MM, MS und/oder die Mitfahrplattform 24 und die ggf. vorhandenen Stützwangen 28 in ihrer Außerbetriebsstellung AM, AS befinden. Darüber hinaus können noch Steuermittel vorgesehen werden, die in Abhängigkeit der Stellung der Mitfahrplattform 24 und/oder der ggf. vorhandenen Stützwangen 28 beispielsweise unterschiedliche Fahrgeschwindigkeiten des Gabelhubwagens 10 zulassen.

Es ist noch darauf hinzuweisen, daß das Lasttragteil 16 mit Lasttraggabeln 16a versehen ist, die an dem antriebsteilfernen Ende durch Stützrollen 16b abgestützt sind (vgl. Fig. 1). Die Stützrollen 16b werden über ein nicht weiter dargestelltes Betätigungsgestänge ausgeschwenkt, wenn das Lasttragteil 16 durch das hydraulisch betätigbare Kraftgerät vertikal nach oben verschoben wird. An dem Antriebsteil 14 sind noch neben dem Lenk- und Antriebsrad 20 jeweils ein Stützrad 20a angeordnet. Schließlich ist darauf hinzuweisen, daß an dem Lenkorgan 18 nicht weiter gezeigte Betätigungselemente vorgesehen werden können, um von dort aus bestimmte Funktionen des Gabelhubwagens 10 zu steuern. In dem Antriebsteil 14 befindet sich darüber hinaus noch die Steuerung und das Hydraulikgerät zur Betätigung des Kraftgeräts für das Lasttragteil 16, wogegen in dem Lasttragteil 16 nicht weiter gezeigte Batterien angeordnet sind.

## Patentansprüche

1. Lastförderfahrzeug zum Befahren einer Fahrfläche, umfassend einen Grundrahmen (12), eine Lastaufnahmeeinrichtung (16), einen Fahrantrieb, eine zwischen einer Außerbetriebsstellung (AM) und einer im wesentlichen horizontalen Mitfahrstellung (MM) um eine horizontale Schwenkachse (22) schwenkbar an dem Grundrahmen (12) angebrachte Mitfahrplattform (24) und ein an dem Grundrahmen (12) angebrachtes Lenkorgan (18) zur Beeinflussung der Fahrtrichtung durch eine das Lastförderfahrzeug wahlweise gehend oder auf der Mitfahrplattform (24) in deren Mitfahrstellung (MM) stehend mitfahrend begleitende Bedienungsperson, **dadurch gekennzeichnet,** daß an einer Stelle des Lastförderfahrzeugs oberhalb der Mitfahrplattform (24) ein von der Bedienungsperson zu bedienendes Fernbetätigungsorgan (28) vorgesehen ist, durch dessen Bedienung die Mitfahrplattform (24), ausgehend von ihrer Außerbetriebsstellung (AM), an die Mitfahrstellung (MM) angenähert wird.

2. Lastförderfahrzeug nach Anspruch 1, **dadurch gekennzeichnet,** daß die Mitfahrplattform (24) durch Einwirkung auf das Fernbetätigungsorgan (28) von der Außerbetriebsstellung (AM) in eine zwischen der Außerbetriebsstellung (AM) und der Mitfahrstellung (MM) gelegene Bereitschaftsstellung (BM) überführbar ist.

3. Lastförderfahrzeug nach Anspruch 2, **dadurch gekennzeichnet,** daß die Mitfahrplattform (24) in ihrer Bereitschaftsstellung (BM) unter einem Neigungswinkel relativ zur Mitfahrstellung (MM) positioniert ist und zumindest mit ihrem der Schwenkachse (22) entfernten Bereich über den Grundrahmen (12) hinaus nach außen absteht, um von der Bedienungsperson in die Mitfahrstellung (MM) getreten zu werden.

4. Lastförderfahrzeug nach einem der Ansprüche 2 bis 3, **dadurch gekennzeichnet,** daß die Mitfahrplattform (24) in ihrer Bereitschaftsstellung (BM) durch eine Plattformfederung (50) abgestützt und durch die in der Bereitschaftsstellung (BM) auf die Mitfahrplattform (24) tretende Bedienungsperson entgegen der Wirkung der Plattformfederung (50) in die Mitfahrstellung (MM) verschwenkbar ist.

5. Lastförderfahrzeug nach Anspruch 4, **dadurch gekennzeichnet,** daß die Mitfahrplattform (24) durch die Plattformfederung (50) von der Bereitschaftsstellung (BM) in die Außerbetriebsstellung (AM) zurückstellbar ist und durch eine mittels des Fernbetätigungsorgans (28) auslösbare Betätigungskraft von der Außerbetriebsstellung (AM) entgegen der Wirkung der Plattformfeder (50) in die Bereitschaftsstellung (BM) überführbar ist.

6. Lastförderfahrzeug nach einem der Ansprüche 1 bis 5, **dadurch gekennzeichnet,** daß an dem Grundrahmen (12) mindestens eine Stützwange (28) als Seitenstütze für eine auf der Mitfahrplattform (24) in deren Mitfahrstellung (MM) stehende Bedienungsperson angebracht ist.

7. Lastförderfahrzeug nach Anspruch 6, **dadurch gekennzeichnet,** daß die mindestens eine Stützwange (28) zwischen einer Mitfahrstellung (MS) und einer Außerbetriebsstellung (AS) verstellbar ist.

8. Lastförderfahrzeug nach Anspruch 7, **dadurch gekennzeichnet,** daß die Stützwange (28) um eine zu der Schwenkachse (22) der Mitfahrplattform (24) im wesentlichen parallele Schwenkachse (26) zwischen der Mitfahrstellung (MS) und der Außerbetriebsstellung (AS) verschwenkbar ist.

9. Lastförderfahrzeug nach Anspruch 8, **dadurch gekennzeichnet,** daß die Stützwange (28) in ihrer Mitfahrstellung (MS) im wesentlichen horizontal und annähernd parallel zu der Ausladerichtung der Mitfahrplattform (24) gegenüber dem Grundrahmen (12) und in der Außerbetriebsstellung (AS) um annähernd 180° gegenüber der Mitfahrstellung (MS) verschwenkt ist und über einem Teil (12a) des Grundrahmens (12) liegt.

10. Lastförderfahrzeug nach einem der Ansprüche 6 bis 9, **dadurch gegennzeichnet,** daß zwei Stützwangen (28) in im wesentlichen gleicher Höhe im Abstand voneinander an dem Lastförderfahrzeug vorgesehen sind, um eine auf der Mitfahrplattform (24) in deren Mitfahrstellung (MM) stehende Bedienungsperson zwischen sich aufzunehmen.

11. Lastförderfahrzeug nach einem der Ansprüche 7 - 10 **dadurch gekennzeichnet,** daß das Fernbetätigungsorgan von der mindestens einen Stützwange (28) gebildet ist derart, daß bei Annäherung der Stützwange (28) an ihre Mitfahrstellung (MS) eine Bewegung der Mitfahrplattform (24) von ihrer Außerbetriebsstellung (AM) in Richtung auf ihre Mitfahrstellung (MM) ausgelöst wird.

12. Lastförderfahrzeug nach einem der Ansprüche 1 - 11, **dadurch gekennzeichnet,** daß das Fernbetätigungsorgan (28) mit der Mitfahrplattform (24) durch ein mechanisches Kraftübertragungsgestänge (30) verbunden ist.

13. Lastförderfahrzeug nach Anspruch 12, **dadurch gekennzeichnet,** daß das mechanische Kraftübertragungsgestänge (30) mit der Mitfahrplattform (24) lose gekoppelt ist, daß bei Betätigung des Fernbetätigungsorgans (28) im Sinne der Auslösung einer Annäherung der Mitfahrplattform (24) in Richtung auf ihre Mitfahrstellung (MM) das Übertragungsgestänge (30) eine Stellkraft auf die Mitfahrplattform (24) überträgt, bis die Mitfahrplattform (24) eine Bereitschaftsstellung (BM) erreicht hat, und daß die Mitfahrplattform (24) von dieser Bereitschaftsstellung (BM) aus unter Entkopplung von dem Übertragungsgestänge (30) in die Mitfahrstellung (MM) weiter verschwenkbar ist.

14. Lastförderfahrzeug nach Anspruch 13, **dadurch gekennzeichnet,** daß die Mitfahrplattform (24) durch eine im gesamten Verschwenkbereich der Mitfahrplattform (24) zwischen ihrer Mitfahrstellung (MM) und ihrer Außerbetriebsstellung (AM) wirksame, die Mitfahrplattform (24) in Richtung auf die Außerbetriebsstellung (AM) vorspannende Plattformfederung (50) vorgespannt ist und daß das Übertragungsgestänge (30) eine an dem Grundrahmen (12) im wesentlichen vertikal geführte Übertragungsstange (32) aufweist, welche an ihrem oberen Ende (32a) mit dem Fernbetätigungsorgan (28) verbunden ist und an ihrem unteren Ende (32b) mit dem einen Hebelarm (40) eines Winkelshebels (44) gekoppelt ist, dessen anderer Hebelarm (48) auf die Mitfahrplattform (24) einwirkt.

15. Lastförderfahrzeug nach Anspruch 14, **dadurch gekennzeichnet,** daß die Übertragungsstange (32) an ihrem oberen Ende (32a) ein Angriffsorgan (36) trägt, welches von dem Fernbetätigungsorgan (28) beaufschlagbar ist.

16. Lastförderfahrzeug nach einem der Ansprüche 14 oder 15, **dadurch gekennzeichnet,** daß die Übertragungsstange (32) zum Ausgleich von Fertigungstoleranzen längeneinstellbar ist.

17. Lastförderfahrzeug nach einem der Ansprüche 14 - 16, **dadurch gekennzeichnet,** daß die Übertragungsstange (32) in Richtung auf das Fernbetätigungsorgan (28) vorgespannt ist.

18. Lastförderfahrzeug nach einem der Ansprüche 1 - 11 dadurch gekennzeichnet, daß das Fernbetätigungsorgan (28) auf ein Steuerorgan (60) eines elektrischen oder pneumatischen oder hydraulischen Kraftgeräts (58) einwirkt, welches seinerseits auf die Mitfahrplattform (24) einwirkt.

19. Lastförderfahrzeug nach Anspruch 18 **dadurch gekennzeichnet,** daß die Mitfahrplattform (24) auf ihrem gesamten Schwenkweg zwischen der Mitfahrstellung (MM) und der Außerbetriebsstellung (AM) durch eine Plattformfederung (50) beaufschlagt ist, welche die Mitfahrplattform (24) in die Außerbetriebsstellung (AM) zu schwenken sucht, und daß das Kraftgerät (58) zur Verstellung der Mitfahrplattform (24) von der Außerbetriebsstellung (AM) bis in eine Bereitschaftsstellung (BM) ausgebildet ist.

20. Lastförderfahrzeug nach einem der vorhergehenden Ansprüche, **dadurch gekennzeichnet,** daß es die Stellung der Mitfahrplattform (24) überwachende Überwachungsmittel, insbesondere Endschalter, aufweist, die in einer Mitfahrbetriebsart des Lastförderfahrzeugs (10) den Betrieb des Lastförderfahrzeugs (10) nur dann ermöglichen, wenn die Mitfahrplattform (24) in ihrer Mitfahrstellung (MM) ist.

21. Lastförderfahrzeug nach Anspruch 20, soweit letzterer auf einen der Ansprüche 7 bis 19 rückbezogen ist, **dadurch gekennzeichnet,** daß es die Stellung der Stützwange (28) überwachende Überwachungsmittel, insbesondere Endschalter aufweist, die in der Mitfahrbetriebsart den Betrieb des Lastförderfahrzeugs (10) nur dann ermöglichen, wenn die Stützwange (28) in ihrer Mitfahrstellung (MM) ist.

22. Lastförderfahrzeug nach einem der vorhergehenden Ansprüche, **dadurch gekennzeichnet,** daß es die Stellung der Mitfahrplattform (24) überwachende Überwachungsmittel, insbesondere Endschalter, aufweist, die in einer Gehbetriebsart des Lastförderfahrzeugs (10) den Betrieb des Lastförderfahrzeugs (10) nur dann ermöglichen, wenn die Mitfahrplattform (24) in ihrer Außerbetriebsstellung (AM) ist.

23. Lastförderfahrzeug nach Anspruch 22, soweit letzterer auf einen der Ansprüche 7 bis 21 rückbezogen ist, **dadurch gekennzeichnet,** daß es die Stellung der Stützwange (28) überwachende Überwachungsmittel, insbesondere Endschalter aufweist, die in der Gehbetriebsart den Betrieb des Lastförderfahrzeugs (10) nur dann ermöglichen, wenn die Stützwange (28) in ihrer Außerbetriebsstellung (AS) ist.

24. Lastförderfahrzeug nach einem der vorhergehenden Ansprüche, **dadurch gekennzeichnet,** daß es Steuermittel für den Fahrbetrieb aufweist, welche unterschiedliche Fahrgeschwindigkeiten des Lastförderfahrzeugs (10) in Abhängigkeit von der Stellung der Mitfahrplattform (24) zulassen.

25. Lastförderfahrzeug nach einem der Ansprüche 7 bis 24,
**dadurch gekennzeichnet,** daß es Steuermittel für den Fahrbetrieb aufweist, welche unterschiedliche Fahrgeschwindigkeiten des Lastförderfahrzeugs (10) in Abhängigkeit von der Stellung der Stützwange (28) zulassen.

## Claims

1. A load-handling vehicle for travel on a floor surface, comprising a base frame (12), a load-bearing device (16), a travelling drive, a ride platform (24) which is mounted on the base frame (12) and which is pivotable about a horizontal pivot axis (22) between an inoperative position (AM) and a substantially horizontal ride position (MM) , and a steering member (18) mounted on the base frame (12) for the control of the travel direction by an accompanying operator optionally walking with the load-handling vehicle or standing and riding on the ride platform (24) in its ride position (MM), characterised in that at a location of the load-handling vehicle above the ride platform (24) a remote-control member (28) is provided, the operation of which causes the ride platform (24), starting from its inoperative position (AM), to approach the ride position (MM).

2. A load-handling vehicle according to Claim 1, characterised in that by acting on the remote-control member (28) the ride platform (24) can be transferred from the inoperative position (AM) into a stand-by position (BM) situated between the inoperative position (AM) and the ride position (MM).

3. A load-handling vehicle according to Claim 2, characterised in that in its stand-by position (BM) the ride platform (24) is positioned at an angle of inclination relative to the ride position (MM) and projects outwards beyond the base frame (12) at least with its portion remote from the pivot axis (22), so that the operator can step thereon and bring it into the ride position (MM).

4. A load-handling vehicle according to Claim 2 or Claim 3, characterised in that in its stand-by position (BM) the ride platform (24) is supported by a platform suspension (50) and by the operator stepping on the ride platform (24) in the stand-by position (BM) it can be pivoted into the ride position (MM) against the action of the platform suspension (50).

5. A load-handling vehicle according to Claim 4, characterised in that the ride platform (24) can be reset by the platform suspension (50) from the stand-by position (BM) into the inoperative position (AM) and can be transferred by an actuating force, which can be triggered by means of the remote-control member (28), from the inoperative position (AM) against the action of the platform suspension (50) into the stand-by position (BM).

6. A load-handling vehicle according to any one of Claims 1 to 5, characterised in that at least one side support plate (28) is mounted on the base frame (12) as a lateral support for an operator standing on the ride platform (24) in the ride position (MM) thereof.

7. A load-handling vehicle according to Claim 6, characterised in that the at least one side support plate (28) is displaceable between a ride position (MS) and an inoperative position (AS).

8. A load-handling vehicle according to Claim 7, characterised in that the side support plate (28) is pivotable between the ride position (MS) and the inoperative position (AM) about a pivot axis (26) substantially parallel to the pivot axis (22) of the ride platform (24).

9. A load-handling vehicle according to Claim 8, characterised in that in its ride position (MS) the side support plate (28) is disposed substantially horizontal and approximately parallel to the cantilever direction of the ride platform (24) with respect to the base frame (12) and in the inoperative position (AS) is pivoted through approximately 180° relative to the ride position (MS) and is situated above a portion (12a) of the base frame (12).

10. A load-handling vehicle according to any one of Claims 6 to 9, characterised in that two side support plates (28) are provided at substantially the same height spaced apart from one another on the load-handling vehicle, so as to accommodate between them an operator standing on the ride platform (24) in its ride position (MM).

11. A load-handling vehicle according to any one of Claims 7 to 10, characterised in that the remote-control member is formed by the at least one side support plate (28) in such a way that, when the side support plate (28) approaches its ride position (MS), a movement of the ride platform (24) from its inoperative position (AM) towards its ride position (MM) is triggered.

12. A load-handling vehicle according to any one of Claims 1 to 11, characterised in that the remote-control member (28) is connected with the ride platform (24) by a mechanical force-transmission linkage (30).

13. A load-handling vehicle according to Claim 12, characterised in that the mechanical force-transmission linkage (30) is loosely coupled to the ride platform (24), in that, upon actuation of the remote-control member (28) for the purpose of triggering an approach of the ride platform (24) towards its ride position (MM), the transmission linkage (30) transmits a displacement force to the ride platform (24) until the ride platform (24) has reached a stand-by position (BM), and in that the ride platform (24) can be pivoted further from this stand-by position (BM), while being uncoupled from the transmission linkage (30), into the ride position (MM).

14. A load-handling vehicle according to Claim 13, characterised in that the ride platform (24) is preloaded by a platform suspension (50) acting throughout the pivot range of the ride platform (24) between its ride position (MM) and its inoperative position (AM) and preloading the ride platform (24) towards the inoperative position (AM), and in that the transmission linkage (30) has a transmission rod (32) which is guided substantially vertically on the base frame (12) and which at its upper end (32a) is connected to the remote-control member (28) and at its lower end (32b) is coupled to one lever arm (40) of an elbow lever (44), the other lever arm (48) of which acts on the ride platform (24).

15. A load-handling vehicle according to Claim 14, characterised in that at its upper end (32a) the transmission rod (32) has an engagement member (36) which can be acted upon by the remote-control member (28).

16. A load-handling vehicle according to Claim 14 or 15, characterised in that the transmission rod (32) is adjustable in length to compensate for production tolerances.

17. A load-handling vehicle according to any one of Claims 14 to 16, characterised in that the transmission rod (32) is preloaded towards the remote-control member (28).

18. A load-handling vehicle according to any one of Claims 1 to 11, characterised in that the remote-control member (28) acts on a control member (60) of an electric or pneumatic or hydraulic power unit (58) which, in turn, acts on the ride platform (24).

19. A load-handling vehicle according to Claim 18, characterised in that over its entire pivoting travel between the ride position (MM) and the inoperative position (AM) the ride platform (24) is acted upon by a platform suspension (50) which tends to pivot the ride platform (24) into the inoperative position (AM), and in that the power unit (58) is designed to displace the ride platform (24) from the inoperative position (AM) into a stand-by position (BM).

20. A load-handling vehicle according to any one of the preceding Claims, characterised in that it has control means, in particular limit switches, which control the position of the ride platform (24) and which, in operation with the operator riding on the load-handling vehicle (10), only enable the load-handling vehicle (10) to operate when the ride platform (24) is in its ride position (MM).

21. A load-handling vehicle according to Claim 20, insofar as the latter is appended to any one of Claims 7 to 19, characterised in that it has control means, in particular limit switches, which control the position of the side support plate (28) and which, in operation with the operator riding on the load-handling vehicle (10), only enable the load-handling vehicle (10) to operate when the side support plate (28) is in its ride position (MM).

22. A load-handling vehicle according to any one of the preceding Claims, characterised in that it has control means, in particular limit switches, which control the position of the ride platform (24) and which, in operation with the operator walking with the load-handling vehicle (10), only enable the load-handling vehicle (10) to operate when the ride platform (24) is in its inoperative position (AM).

23. A load-handling vehicle according to Claim 22, insofar as the latter is appended to any one of Claims 7 to 21, characterised in that it has control means, in particular limit switches, which control the position of the side support plate (28) and which, in operation with the operator walking with the load-handling vehicle (10), only enable the load-handling vehicle (10) to operate when the side support plate (28) is in its inoperative position (AS).

24. A load-handling vehicle according to any one of the preceding Claims, characterised in that it has control means for the running operation, which allow different running speeds of the load-handling vehicle (10) as a function of the position of the ride platform (24).

25. A load-handling vehicle according to any one of Claims 7 to 24, characterised in that it has control means for the running operation, which allow different running speeds of the load-handling vehicle (10) as a function of the position of the side support plate (28).

## Revendications

1. Véhicule de transport de charges destiné à rouler sur une surface, comportant un cadre de base (12), un dispositif de réception de charge (16), un mécanisme d'entraînement, une plate-forme d'accompagnement (24), montée sur le cadre de base (12), de manière à pivoter autour d'un axe de pivotement (22) horizontal, entre une position hors service (AM) et une position d'accompagnement (MM) sensiblement horizontale, ainsi qu'un organe de direction (18), fixé sur le cadre de base (12), destiné à influencer le sens de marche par un opérateur accompagnant le véhicule de transport de charges, soit à pied, soit transporté debout sur la plate-forme d'accompagnement (24) dans sa position d'accompagnement (MM), caractérisé en ce qu'en un point du véhicule de transport de charges, au-dessus de la plate-forme d'accompagnement (24), il est prévu un organe de commande à distance (28) à commander par l'opérateur, dont la commande fait que la plate-forme d'accompagnement (24), partant de sa position hors service (AM), est rapprochée de la position d'accompagnement (MM).

2. Véhicule de transport de charges selon la revendication 1, caractérisé en ce que la plate-forme d'accompagnement (24) peut passer, par action sur l'organe de commande à distance (28), de la position hors service (AM) dans une position d'attente (BM), située entre la position hors service (AM) et la position d'accompagnement (MM).

3. Véhicule de transport de charges selon la revendication 2, caractérisé en ce que la plate-forme d'accompagnement (24) en position d'attente (BM) est positionnée sous un angle d'inclinaison par rapport à la position d'accompagnement (MM) et fait saillie vers l'extérieur du cadre de base (12), au moins avec sa zone éloignée de l'axe de pivotement (22), afin que l'opérateur puisse monter sur la plate-forme en position d'accompagnement (MM).

4. Véhicule de transport de charges selon l'une des revendications 2 à 3, caractérisé en ce que la plate-forme d'accompagnement (24) en position d'attente (BM) est soutenue par une suspension à ressort de plate-forme (50) et peut pivoter, à l'encontre de la suspension à ressort (50), dans la position d' accompagnement (MM), par l'opérateur montant sur la plate-forme d'accompagnement (24) en position d'attente (BM).

5. Véhicule de transport de charges selon la revendication 4, caractérisé en ce que la plate-forme d'accompagnement (24) peut être replacée par la suspension à ressort (50) de la position d'attente (BM) dans la position hors service (AM) et peut passer, par une force d'actionnement déclenchable au moyen de l'organe de commande à distance (28), de la position hors service (AM), à l'encontre de l'effet du ressort de plate-forme (50), dans la position d'attente (BM).

6. Véhicule de transport de charges selon l'une des revendications 1 à 5, caractérisé en ce que sur le cadre de base (12) est fixé au moins une rampe d'appui (28) servant d'appui latéral pour un opérateur se tenant sur la plate-forme d'accompagnement (24), dans sa position d'accompagnement (MM).

7. Véhicule de transport de charges selon la revendication 6, caractérisé en ce que l'au moins une rampe d'appui (28) est déplaçable entre une position d'accompagnement (MS) et une position hors service (AS).

8. Véhicule de transport de charges selon la revendication 7, caractérisé en ce que la rampe d'appui (28) peut pivoter autour d'un axe de pivotement (26), sensiblement parallèle à l'axe de pivotement (22) de la plate-forme d'accompagnement (24), entre la position d'accompagnement (MS) et la position hors service (AS).

9. Véhicule de transport de charges selon la revendication 8, caractérisé en ce que la rampe d'appui (28) dans sa position d'accompagnement (MS) est sensiblement horizontale et approximativement parallèle à la direction de déchargement de la plate-forme d'accompagnement (24), par rapport au cadre de base (12), et dans sa position hors service (AS), est pivoté de 180° environ par rapport à la position d'accompagnement (MS), et se situe au-dessus d'une partie (12a) du cadre de base (12).

10. Véhicule de transport de charges selon l'une des revendications 6 à 9, caractérisé en ce qu'il est prévu deux rampes d'appui (28) sensiblement à même hauteur, espacées l'une de l'autre, sur le véhicule de transport de charge, afin de loger entre eux un opérateur se tenant sur la plate-forme d'accompagnement (24), dans sa position d'accompagnement (MM).

11. Véhicule de transport de charges selon l'une des revendications 7 à 10, caractérisé en ce que l'organe de commande à distance est formé par l'au moins une rampe d'appui (28) de manière que lorsque la rampe d'appui (28) s'approche de sa position d'accompagnement (MS), un déplacement de la plate-forme d'accompagnement (24) de sa position hors service (AM) en direction de sa position d'accompagnement (MM), soit déclenché.

12. Véhicule de transport de charges selon l'une des revendications 1 à 11, caractérisé en ce que l'organe de commande à distance (28) est relié à la plate-forme d'accompagnement (24) par une tringlerie de transmission de force (30) mécanique.

13. Véhicule de transport de charges selon la revendication 12, caractérisé en ce que la tringlerie de transmission de force (30) mécanique est couplée librement à la plate-forme d'accompagnement (24), en ce qu'en cas d'actionnement de l'organe de commande à distance (28) dans le sens du déclenchement d'un rapprochement de la plate-forme d'accompagnement (24) en direction de sa position d'accompagnement (MM), la tringlerie de transmission (30) transmet une force de réglage à la plate-forme d'accompagnement (24), jusqu'à ce que la plate-forme d'accompagnement (24) atteigne une position d'attente (BM), et en ce que la plate-forme d'accompagnement (24) peut encore être pivotée depuis cette position d'attente (BM), dans la position d'accompagnement (MM), par désaccouplement de la tringlerie de transmission (30).

14. Véhicule de transport de charges selon la revendication 13, caractérisé en ce que la plate-forme d'accompagnement (24) est précontrainte par une suspension à ressort de plateforme (50), agissant dans toute la plage de pivotement de la plate-forme d'accompagnement (24), entre sa position d'accompagnement (MM) et sa position hors service (AM), précontraignant la plate-forme d'accompagnement (24) en direction de la position hors service (AM), et en ce que la tringlerie de transmission (30) comporte une tringle de transmission (32) guidée sensiblement verticalement sur le cadre de base (12), laquelle tringle est reliée à son extrémité supérieure (32a) avec l'organe de commande à distance (28) et à son extrémité inférieure (32b) est accouplée avec l'un des bras de levier (40) d'un levier coudé (44) dont l'autre bras de levier (48) agit sur la plate-forme d'accompagnement (24).

15. Véhicule de transport de charges selon la revendication 14, caractérisé en ce que la tringlerie de transmission (32) porte à son extrémité supérieure (32a) un organe d'attaque qui peut être sollicité par l'organe de commande à distance (28).

16. Véhicule de transport de charges selon l'une des revendications 14 ou 15, caractérisé en ce que la tringlerie de transmission (32) est réglable dans sa longueur pour compenser des tolérances de fabrication.

17. Véhicule de transport de charges selon l'une des revendications 14 à 16, caractérisé en ce que la tringlerie de transmission (32) est précontrainte en direction de l'organe de commande à distance (28).

18. Véhicule de transport de charges selon l'une des revendications 1 à 11, caractérisé en ce que l'organe de commande à distance (28) agit sur un organe de commande (60) d'un appareil énergétique (58) électrique ou pneumatique ou hydraulique, qui de son côté agit sur la plate-forme d'accompagnement (24).

19. Véhicule de transport de charges selon la revendication 18, caractérisé en ce que la plate-forme d'accompagnement (24) est sollicitée sur toute sa distance de pivotement entre la position d'accompagnement (MM) et la position hors service (AM), par une suspension à ressort de plate-forme (50), qui tend à faire pivoter la plate-forme d'accompagnement (24) dans la position hors service (AM), et en ce que l'appareil énergétique (58) est conçu pour déplacer la plate-forme d'accompagnement (24) depuis la position hors service (AM) jusque dans une position d'attente (BM).

20. Véhicule de transport de charges selon l'une des revendications précédentes, caractérisé en ce qu'il comporte des moyens de contrôle contrôlant la position de la plate-forme d'accompagnement (24), en particulier des interrupteurs de fin de course, qui dans un mode de fonctionnement d'accompagnement du véhicule de transport de charge (10), ne permettent le fonctionnement du véhicule de transport de charge (10) que si la plate-forme d'accompagnement (24) est dans une position d'accompagnement (MM).

21. Véhicule de transport de charges selon la revendication 20, dans la mesure où cette dernière se rapporte à l'une des revendications 7 à 19, caractérisé en ce qu'il comporte des moyens de contrôle contrôlant la position de la rampe d'appui (28), en particulier des interrupteurs de fin de course, qui dans le mode de fonctionnement d'accompagnement ne permettent le fonctionnement du véhicule de transport de charge (10) que si la rampe d'appui (28) est dans sa position d'accompagnement (MM).

22. Véhicule de transport de charges selon l'une des revendications précédentes, caractérisé en ce qu'il comporte des moyens de contrôle contrôlant la position de la plate-forme d'accompagnement (24), en particulier des interrupteurs de fin de course, qui dans un mode de fonctionnement d'accompagnement à pied du véhicule de transport de charge (10), ne permettent le fonctionnement du véhicule de transport de charge (10) que si la plate-forme d'accompagnement (24) est dans sa position hors service (AM).

23. Véhicule de transport de charges selon la revendication 22, dans la mesure où cette dernière se rapporte à l'une des revendications 7 à 21, caractérisé en ce qu'il comporte des moyens de contrôle contrôlant la position du côté d'appui (28), en particulier des interrupteurs de fin de course, qui dans le mode de fonctionnement d'accompagnement à pied n'autorisent le fonctionnement du véhicule de transport de charge (10) que si la rampe d'appui (28) est dans sa position hors service (AS).

24. Véhicule de transport de charges selon l'une des revendications précédentes, caractérisé en ce qu'il comporte des moyens de commande pour la conduite, qui autorisent différentes vitesses de marche du véhicule de transport de charges (10), en fonction de la position de la plate-forme d'accompagnement (24).

25. Véhicule de transport de charges selon l'une des revendications 7 à 24, caractérisé en ce qu'il comporte des moyens de commande pour la conduite, qui autorisent différentes vitesses de marche du véhicule de transport de charge (10) en fonction de la position de la rampe d'appui (28).
